# EUROPEAN PATENT SPECIFICATION

(11) **EP 0 743 906 B1**
(45) Date of publication and mention of the grant of the patent: **06.08.2003**
(21) Application number: 95910341.7
(22) Date of filing: 27.02.1995
(51) Int. Cl.: B60G 21/067, B60G 21/06, B60G 21/073

(54) **HYDRAULIC SUSPENSION WITH INDEPENDENT PITCH AND ROLL CONTROL**
HYDRAULISCHE AUFHÄNGUNG MIT UNABHÄNGIGER REGELUNG VON NICK- UND ROLLBEWEGUNG
SUSPENSION HYDRAULIQUE A CONTROLE INDEPENDANT DE TANGAGE ET DE ROULIS

(30) Priority: 25.02.1994 AU PM409294; 30.05.1994 AU PM596294; 26.10.1994 WO PCT/AU94/00646
(43) Date of publication of application: 27.11.1996
(73) Proprietor: KINETIC LIMITED, Dunsborough, W.A. 6281 (AU)
(72) Inventor: HEYRING, Christopher, Brian, Eagle Bay, W.A. 6281 (AU); THOMPSON, Ian, Reginald, Duncraig, W.A. 6023 (AU)
(74) Representative: Ajello, Michael John
(86) International application number: AU9500096
(87) International publication number: WO95023076

(56) References cited:
- EP-A- 0 035 330
- WO-A-93/01948
- WO-A-93/19945
- DE-A- 3 426 734
- GB-A- 820 194
- GB-A- 844 146
- US-A- 3 024 037
- US-A- 3 032 349
- PATENT ABSTRACTS OF JAPAN vol. 013, no. 282 (M-843), 28 June 1989 & JP 01 078912 A (HIDEO NAKADA), 24 March 1989
- PATENT ABSTRACTS OF JAPAN vol. 014, no. 373 (M-1009), 13 August 1990 & JP 02 136319 A (MAZDA MOTOR CORP), 24 May 1990

## Description

This invention relates to improvements in the suspension system for a vehicle, and is specifically related to controlling the disposition of the vehicle body relative to the ground when the vehicle is subject to variations in the contour of the surface being traversed.

In recent times there has been a trend towards resilient sprung suspension systems incorporating variable damping and spring rates in an attempt to improve vehicle stability and reduce movement of the vehicle body relative to the surface being traversed.

A range of suspension systems known as 'active' and 'semi-active' suspensions for vehicles have been trialed including systems operating on the basis of compression and/or displacement of fluids and such systems currently in use incorporate a pump, to maintain the working fluid at the required pressure and effect the high speed distribution thereof, and sophisticated control mechanisms to regulate the operation of the suspension system in accordance with sensed road and/or vehicle operating conditions. These known systems incorporating pumps and electronic control systems, which both usually operate continuously while the vehicle is in operation, are comparatively expensive to construct and maintain, and require a substantial energy input. They therefore are finding limited acceptability in the vehicle industry.

There is previously published an International Patent Application (International Publication Number WO 93/01948, International Application Number PCT/AU92/00362 and dated 4th February, 1993) which discloses a 'passive' hydropneumatic vehicular suspension system. This disclosed passive suspension system has many of the advantages of 'active' or 'semi-active' suspension systems, whilst avoiding the complexity and expense of such systems, thereby making it more acceptable to the automotive industry.

In the suspension system disclosed in said patent a front wheel ram and the diagonally opposite rear wheel ram have the upper chamber of the front ram interconnected with the lower chamber of the rear ram and the lower chamber of the front ram interconnected to the upper chamber of the rear ram. Similarly the. respective chambers of the other front ram and rear ram are likewise interconnected. There is thus provided two individual fluid circuits, each comprising a front ram and a diagonally opposite rear ram. Each of the conduits interconnecting the respective upper and lower chambers normally has at least one conventional pressure accumulator in communication therewith. The two circuits are interconnected to a pressure balancing device which is arranged to maintain a substantially equal pressure in the two circuits, as is described in detail in the previously referred to International Patent Application No. WO93/01948, on which the preamble of claim 1 is based.

This prior proposed vehicle suspension system obviates the use of ordinary springs (eg. coils, leaf, or torsion bar springs) as well as conventional telescopic dampers (commonly referred to as shock absorbers) and roll or sway stabiliser bars.

Springing or resilience is provided by way of the gas filled accumulators with damper valves located in the mouths of the accumulators. Conventional vehicles fitted with accumulator springs are known to provide good comfort levels when traversing low amplitude ground surfaces at most speeds. However, accumulators gassed to provide a soft ride also tend to induce and exaggerate unwanted roll and pitch motions when used without roll or sway stabiliser bars. Most hydropneumatically suspended vehicles are therefore normally provided with roll or sway bars made of spring steel which mechanically and transversely interconnect the two wheels of each axle thereby limiting roll but not pitch movements.

In the suspension system described above, (Patent # WO 93/01948), excessive roll movements are resisted and controlled hydropneumatically without roll stabiliser bars and the amount of roll permitted is defined by a function of the ratio of the rams' cylindrical bore diameters (of the diagonally opposite rams) to the ram rod diameters, and with regard to their stroke lengths and with regard to the amount of gas within the various accumulators of the suspension system.

It is also to be noted that the type of wheel geometry and the location and design of various components may give some components a mechanical advantage over others thereby providing for example, an appropriate but different amount of roll stiffness at the front relative to the rear of the vehicle which to an extent defines whether the vehicles under or oversteers when cornering.

In conventional vehicles, roll forces are resisted by the roll or sway bars, i.e. transverse mounted, formed spring steel bars which must be deformed in torsion for any body roll to occur. Conversely, pitch motion in the longitudinal plane is normally only partially resisted by the design of the suspension geometry with spring resonances being avoided through the appropriate selection of front and rear spring and damper rates without the need for any direct acting mechanical equivalent of the roll bar. This is because the pitching actions in the longitudinal direction are less severe than the transverse rolling actions.

It has been found that the system previously disclosed provides adequate comfort, stability and relatively consistent wheel loading irrespective of relative wheel travel positions during many manoeuvres such as axle articulations and single wheel inputs, however, the magnitude of pitch and roll control is governed by the same components and the effective linear stiffness of each wheel in relation to the vehicle body in either pitch or roll is typically the same. In long wheel based vehicles this translates to stiff pitch characteristics in relation to roll. In short wheel based vehicles, pitch and roll stiffness become closer in magnitude. As most vehicles are considerably narrower than they are long, and due to other geometric effects it has been found that roll is more difficult to control than pitch as noted above. Indeed, when the suspension system is designed to adequately contain roll movement the pitch motions may be consequently over compensated for in the system. This may be further clarified as follows:

In order to contain high roll forces resulting from a high centre of gravity with respect to the relatively closely located rams (in the transverse direction), it is necessary to supply rams with a greater difference in rod and bore diameters. This therefore may automatically generate an unnecessary amount of pitch resistance or control in the longitudinal direction and this can lead to harshness of ride quality in some conditions. In particular it has been found that while body disturbance due to axle articulation movements and single wheel inputs is minimised, road surfaces that give rise to double wheel inputs on a single axle (such as "speed humps") or sinusoidal road profiles can upset the previously disclosed suspension system. Typically this occurs when a vehicle's wheel base length approximates to half of the spacing of the humps disposed along the road surface. In order to traverse this kind of road surface smoothly (without excessive pitch motions being induced) both axles need to become independent in their motion, however the previously disclosed interrelated hydro-pneumatic system interprets these motions as high speed pitch movements and therefore attempts to resist them as though they were unwanted pitch motions. This type of high speed pitch resistance and over compensation manifests itself as an inappropriate pitch harshness which can become additionally uncomfortable when the vehicle moves over repeated bumps or dips causing increasingly exaggerated and inappropriate resonant responses.

Previously published Japanese patent specification No. JP-01-078912 describes a vehicle suspension system having vibration dampers in parallel with suspension springs which can provide control of the roll stiffness and height of the vehicle. In this prior art system a fluidic ram associated with one of the vehicle wheels is not connected to the diagonally opposite wheel, but to the laterally adjacent wheel. Pressure control valves are provided which, if opened, permit fluid to flow freely from front to rear of the vehicle which thus affords no resistance to vehicle pitch. If the pressure control valves are closed, there is no communication whatsoever between the front and rear rams, so the warp stiffness is the same as the roll stiffness, and the pitch stiffness becomes determined solely by the heave stiffness.

It is therefore an object of this invention to provide a vehicle suspension system which will provide a more optimal relationship between the pitch and roll control of the vehicle.

According to the present invention there is provided a suspension system for a vehicle having a load support vehicle body, and at least one pair of front ground engaging wheels and at least one pair of rear ground engaging wheels connected to the vehicle body to support same and each wheel being displaceable relative to the vehicle body in a generally vertical direction, the suspension system comprising:
a double acting ram interconnected between each wheel and the vehicle body, each ram including first and second fluid filled chambers varying in volume in response to relative vertical movement between the respective wheel and the vehicle body, each front wheel ram being connected to the diagonally opposite rear wheel ram by a respective pair of fluid communicating conduits a first one of said pair of conduits connecting the first chamber of the front wheel ram to the second chamber of the rear wheel ram and the second one of said pair of conduits connecting the second chamber of the front wheel ram to the first chamber of the rear wheel ram, each pair of conduits and the front and rear wheel rams interconnected thereby constituting a respective closed circuit whereby first and second closed circuits are formed;
a pressure distribution means interposed between the first and second closed circuits and adapted to substantially achieve pressure equilibrium between said closed circuits, said pressure distribution means comprising two primary pressure chambers each divided into two secondary pressure chambers by force transfer means, the two secondary chambers of one said primary chamber being connected to the first chambers of the rams on one side of the vehicle, the two secondary chambers of the other said primary chamber being connected to the first chambers of the rams on the other side of the vehicle, such that roll motions of the vehicle body are resisted across the force transfer means;
the force transfer means of one of said primary pressure chambers being operatively interconnected to the force transfer means of the other said primary pressure chamber by interconnection means to transfer motion therebetween, and characterised in that the interconnection means includes resilience to further permit controlled independent motion to vary the relative positions of the force transfer means in said primary pressure chambers, and thereby provide additional resilience in a pitch direction of the vehicle body relative to a roll direction of the vehicle body.

The above described suspension system has the ability to generally maintain all wheels in tractive contact with the surface being traversed, particularly in situations of extreme surface irregularity as experienced in off-road operation. In addition, effective control of bounce pitch and roll of the vehicle is achieved by virtue of the fluid system controlling concurrently unidirectional movement of any two longitudinally adjacent or two laterally adjacent wheels relative to the vehicle. Maintenance of tractive contact of all wheels with the ground is achieved by the pressure conditions in the respective rams being balanced by the pressure distribution means and the control of pitch and roll is by the pressure and movement of fluid between the rams and between the rams and the pressure distribution means.

Conveniently said resilient means is arranged to be capable of transferring both tension and compressive forces. Preferably said resilient means is a metal or gas spring or a member of resilient material, such as a member of rubber or plastic.

The hydraulic rams are of the double acting type. The chambers of the rams that are providing the support for the vehicle are connected to the pressure distribution means. The pressure distribution means are to restrict the lateral roll of the vehicle whilst still permitting a degree of pitch resilience. Thus, one primary chamber of the pressure distribution means is in communication with the fluid chambers of the wheels on one longitudinal side of the vehicle and the other primary chamber of the pressure distribution means is in communication with the fluid cylinders of the wheels on the other side of the vehicle.

The invention will be more readily understood from the following description of a number of alternative arrangements of the vehicle suspension system with reference to the accompanying drawings.

In the drawings:-
Figure 1 is a diagrammatic representation of the suspension system;
Figure 2 is an enlarged diagrammatic view of the load distribution unit as incorporated in the suspension system shown in Figure 1;
Figures 3 to 7 illustrate alternative forms of the load distribution unit that may be used in the suspension system shown in Figure 1.
Figures 8 and 9 which do not illustrate embodiments of the invention but are included only as examples useful for understanding the invention, are diagrammatic representations of a vehicle with a suspension system incorporating single acting hydraulic rams to support a vehicle body.
Figure 10 is a diagrammatic representation of a suspension system in accordance with the invention, incorporating a further alternative load distribution unit.
Figure 11 is a suspension system as shown in Figure 1 incorporating a load distribution lockout arrangement.

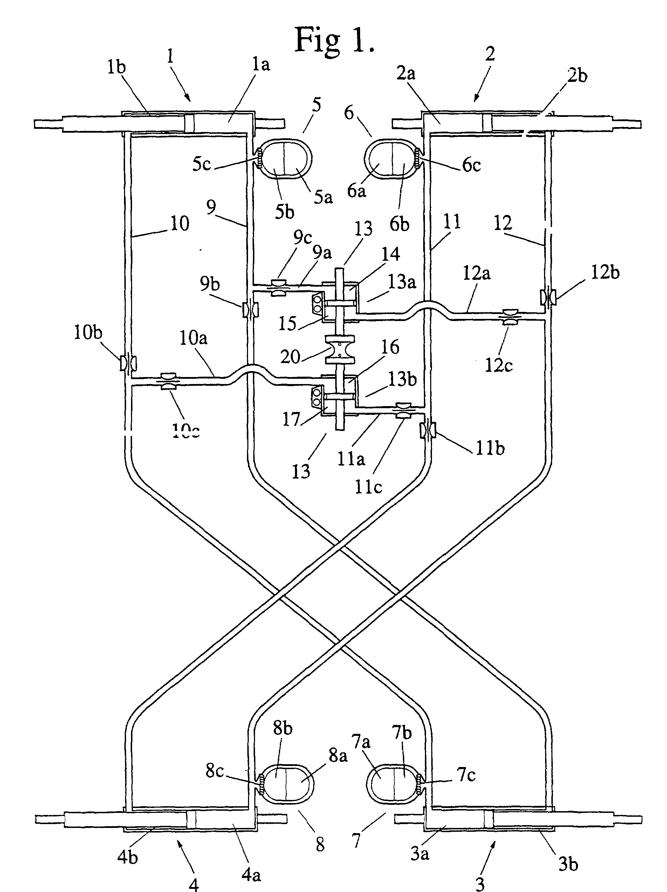

Referring now to Figure 1, four hydraulic cylinders or rams 1, 2, 3 and 4 are located in between the vehicular body/chassis (not shown) and the wheel units (not shown) so that as each wheel moves relatively to the chassis, the rams are caused to be contracted or extended.

As shown in Figure 1, the ram is functionally related to the front left wheel while ram 2 is similarly associated with the front right wheel. Ram 3 is associated with the rear right hand side wheel while ram 4 is located between the rear left wheel and the chassis. The front of the vehicle is therefore represented towards the top of the page.

Four conventional oil over gas accumulator springs 5, 6, 7, 8 are shown such that accumulator 5 is associated with the front left wheel and accumulator 8 with the rear left wheel, for example. The portion or chamber 5a, 6a, 7a, 8a of each of the accumulators is filled with gas, while the hydraulic oil filled portions 5b, 6b, 7b, 8b are in communication with the gas chambers 5a,6a,7a,8a. The oil and gas chambers are normally separated with a flexible diaphragm or free piston. Damper valves 5c, 6c, 7c, 8c are conveniently located in the mouths of the accumulators 5, 6, 7, 8.

When double acting wheel rams are used they are normally conventionally divided into two reciprocal chambers including a larger chamber 1a, 2a, 3a, 4a, and a smaller chamber 1b, 2b, 3b, 4b, the smaller chamber accommodating a piston rod..

The upper larger chamber 1a is connected to the lower smaller chamber 3b of the diagonally opposite wheel by way of pipe or conduit 9 while the upper chamber 3a of this wheel, is connected to the lower chamber 1b of the first cylinder by way of pipe 10. These pipes therefore complete a pair of fluid circuits interconnecting one pair of diagonally opposite wheels, top to bottom chamber and visa versa. The other pair of diagonally opposite wheels are similarly interconnected 2a to 4b via conduit 11 and 4a to 2b via conduit 12.

Located (centrally) in any convenient place and in any suitable manner there is a component which can be referred to as the load distribution unit 13.

An earlier version of a load distribution unit is described in the Applicants' earlier patent WO 93/01948 and is normally constructed out of cylindrical tube divided by a fixed wall and having a movable piston in each chamber.

The two pistons in the former proposed construction were directly connected by a rod extending through the entire length of the cylinder so that both pistons were caused to move together in unison resulting in two of the chambers becoming enlarged simultaneously while the other two were being caused to contract reciprocally at the same time. This design has been found to lead to some inherent problems in certain circumstances described as follows;

In the previously disclosed constructior the piston and rod assembly is unable to move in response to two orthogonal wheel inputs (such as movements over parallel speed humps). The chambers of the load distribution unit were described as being hydraulically connected to the wheels in a sequence such that the fluid pressure and volume changes resulting from two wheel orthogonal inputs oppose each other in order to prevent piston movements within the load distribution unit. The original proposed system was designed specifically to only permit piston and rod movements in the load distribution unit as a response to diagonal axle articulations which induce fluid pressure and volume changes in the load distribution unit to ensure optimal weight was being born by each of the four wheels without regard to their wheel travel positions.

As a consequence of the restriction of movement of the piston and rod assembly in response to two orthogonal wheel inputs suspension pitching motion becomes noticeable in specific situations.

When, for example, the front pair of wheels encounters an obstacle, such as a speed hump across the width of the road, the fluid is firstly expelled from the top chambers of both the front rams, and some of this fluid is forced to enter the associated accumulators via damper valves. Generally the greater the resistance offered by these damper valves the greater the volume of fluid there will be forced to other parts of the connected hydraulic system, and inevitably some fluid enters the diagonally opposite lower chambers.

The transfer of fluid volume from the front rams into the lower chambers of the rear rams forces the associated pistons upwards thereby contracting the two rear rams, which in tum tends to cause the rear of the vehicle to squat. The delay in this procedure at some frequencies can cause the rear of the vehicle to still be moving downwards or squatting when the rear pair of wheels encounter the same speed hump and this can lead to a rapid pitching response as a very rapid change in direction is required at the rear of the vehicle. The additional impact on the wheels of the rear axle also then further contracts the rear rams and this additionally compresses the gas in the associated accumulators.

As the rear wheels depart from the downside of the speed hump the cumulative compression of the gas in the rear accumulator gas chamber caused by the quick succession of front and rear wheel inputs is permitted to expand and thereby expels fluid from the rear accumulator fluid chambers. This can then cause the rear rams to overextend causing the rear of the vehicle to lift beyond the level which is required to re-establish normal ride height. If more humps in the road are then encountered by the front wheels before the vehicle has settled, a resonant response can be set up and can become exaggerated as rapid reversals in vehicle motion take place.

These motions can be at least partially negated by the dampers in the mouths of the accumulators as well as the restrictors located in the conduits. Nevertheless, various permutations of uncomfortable responses to poor road surfaces can occur depending on wheel base length, distance between bumps, speed, damping rates, spring rates and physical location of the rams with regard to the wheel geometry, for example.

The load distribution unit 13 according to the present invention provides resilience to lessen/suppress high frequency small amplitude inputs, and also provides some additional resilience in either pitch or roll motion specifically. The load distribution unit 13 has similarities in construction to the above described unit in that there are provided four chambers. However the one piece piston rod referred to in the prior specifiction is replaced with two piston rods with a resilient buffer interconnecting the two piston rods. Figures 1 to 11 show various alternative constructions of the load distribution unit 13 which are all generally divided into two cylinder portions 13a, 13b each of which comprise two reciprocal volume chambers, 14,15 ,16,17. The same reference numerals are used in each of the Figures for corresponding components.

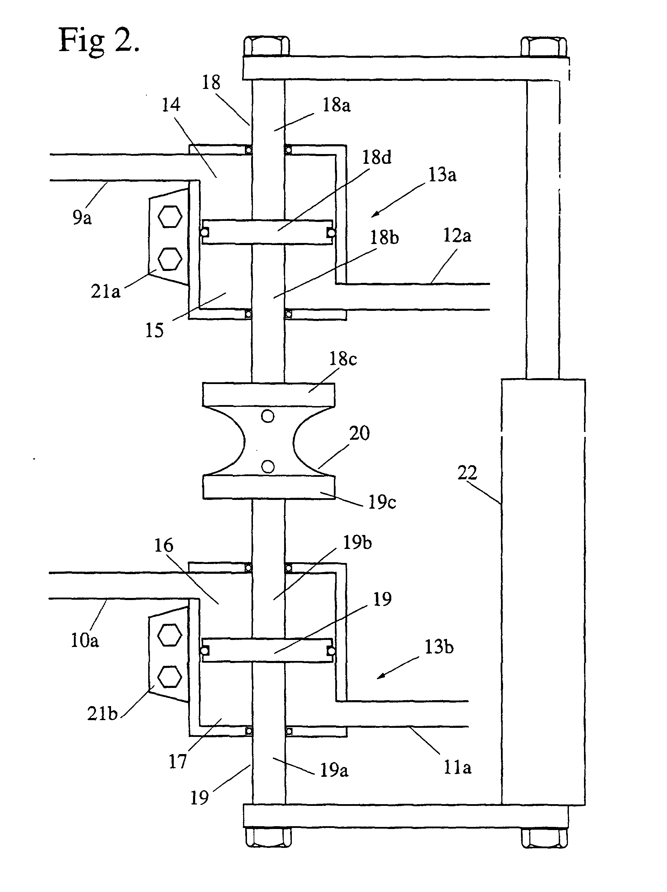

In Figure 1 and 2, the load distribution unit 13 is shown with four main chambers 14, 15, 16, 17 respectively in direct fluid communication with branch lines 9a, 12a, 10a, 11a respectively and these are in fluid communication with ram chambers 1a, 3b, and 4a, 2b, and 3a, 1b, and 2a, 4b respectively via conduits 9, 12, 10, 11.

Chambers 14 and 15 within one cylinder portion 13a act reciprocally therein, as do chambers 16 and 17 in the other cylinder portion 13b. Each cylinder portion 13a, 13b supports a piston assembly 18,19, each piston assembly having a piston 18d,19d, an outer piston rod portion 18a, 19a and an inner piston rod portion 18b, 19b. The two outer piston rod portions 18a, 19a normally terminate outside the chambers at both ends of each of the cylinders to enable the pistons to move freely with respect to the cylinders.

The ends of the inner piston rod portions 18b, 19b which typically face each other may be provided with any convenient attachment means such as the disc fittings shown at the rod ends numbered 18c and 19c.

Between the opposed piston rod assemblies a resilient member or buffer 20 is introduced to provide resilience in either compression or tension or both. In the example shown in Figure 2 the resilient member 20 may comprise a rubberised portion which is joined or bonded to the discs 18c and 19c in Figure 2.

Any movement therefore induced by fluid pressure and volume changes in one pair of reciprocal chambers (such as chambers 14, 15 in cylinder portion 13a) is indirectly transferred via the rod 18 and through the resilient member 20 into the other cylinder portion 13b of the load distribution unit 13 via rod 19 and thereby into the other pair of chambers 16, 17. The purpose of this indirect connection/coupling between the two cylinder portions may be described as follows:

It will be seen in Figure 1 (in conjunction with Figure 2) that the upper chambers 1a, 2a of the rams associated with the front wheels are in fluid communication with chambers 14 and 17 within the opposed cylinder portions of the load equalisation unit 13. If an obstacle (such as a speed hump) is encountered by both front wheels simultaneously, fluid will become expelled out of the upper chambers 1a and 2a.

Some fluid will initially enter the nearest accumulators 5 and 6 through damper valves 5c and 6c and some may be distributed to the rear ram and the control unit. Some fluid under increased pressure will therefore enter the branch lines 9a and 11 a associated with the top front chambers of the rams 1 and 2. This fluid then enters chambers 14 and 17 at the opposite ends of the distribution unit and urge these chambers to enlarge. As they enlarge in volume the two piston and rod assemblies 18, 19 are forced to slide towards each other and this compresses the resilient member 20 which is located between the two cylinder portions 13a and 13b

As the two piston assemblies 18, 19 are forced to move towards one another the chambers 15, 16 (which are reciprocal with chambers 18, 19 respectively) become progressively diminished in size and expel fluid down branch lines 12a, and 10a, into conduits 12 and 10 and thereby introduce fluid at a slightly greater pressure into cylinder chambers 2b, 4a, and 1b, 3a. This has the effect of further softening the impact of the speed bump on the front axle by pushing up the pistons within rams 1, and 2, and more importantly it provides fluid to the top chambers 3a, 4a cf the back rams which tends to raise the rear of the vehicle up as the rams are extended in preparation for the rear wheels impacting the same speed humps.

It should therefore be noted that the resilient member 20 thereby largely reverses the adverse pitch response in the longitudinal plane of the vehicle relative to the prior proposed construction and this then softens the pitch harshness and helps to stabilise resonant pitching motions.

It should also be understood that while the configuration described with reference to Figures 1 and 2 modifies and softens pitch motions it does not effect roll stiffness. However, if it was required that roll stiffness was to be reduced instead of Ditch stiffness the branch line conduits need only be exchanged to connect to the appropriate different chambers on the load distribution unit.

A further benefit of introducing a resilient member 20 into the load distribution unit is that the vehicle's general softness and comfort can be enhanced by the introduction of the resilient member 20 without sacrificing roll stability. It is also possible to reduce the amount of gas in the accumulators below what would normally be required so that the reduction in gas volume adds roll stiffness without adversely effecting comfort levels. Additionally roll stability does not reduce as more weight is loaded onto the vehicle as the gas in the accumulators becomes more compressed which effectively reduces roll.

The introduction of a resilient member such as the rubber component 20, however, can provide some dynamic isolation between wheels when faster small axle articulation movements are occurring. As large axle articulation movements occur only when driving at very slow speeds such as when operating off road, the consequence is there are few pressure spikes energising the resilient member 20 which causes dynamic isolation, and therefore, during slow articulations such dynamic isolation is not noticeable.

The softness of the resilient member 20 should be such that the two piston assemblies 18, 19 should substantially follow each other (or push and pull one another without there being much movement difference or loss between the two piston assemblies 18,19) when there are single or slow diagonally opposed wheel inputs occurring such as when axle articulation is taking place, but the resilient member should not be so hard that when two wheels on the same axle encounter a sudden bump or depression simultaneously that the resilient member is not readily deformed to enable a delayed response in adverse pitch motions.

In practice pressure spikes are significantly greater during two wheel high speed inputs than during slow speed articulation when some stiffness is required so there is some latitude with the choice of resilient means 20. In this context the resilient member can optionally be replaced with any suitable damping mechanism which can similarly delay the transfer of force and movement from one shaft to the other without there being a resilient member such as a spring between the shafts.

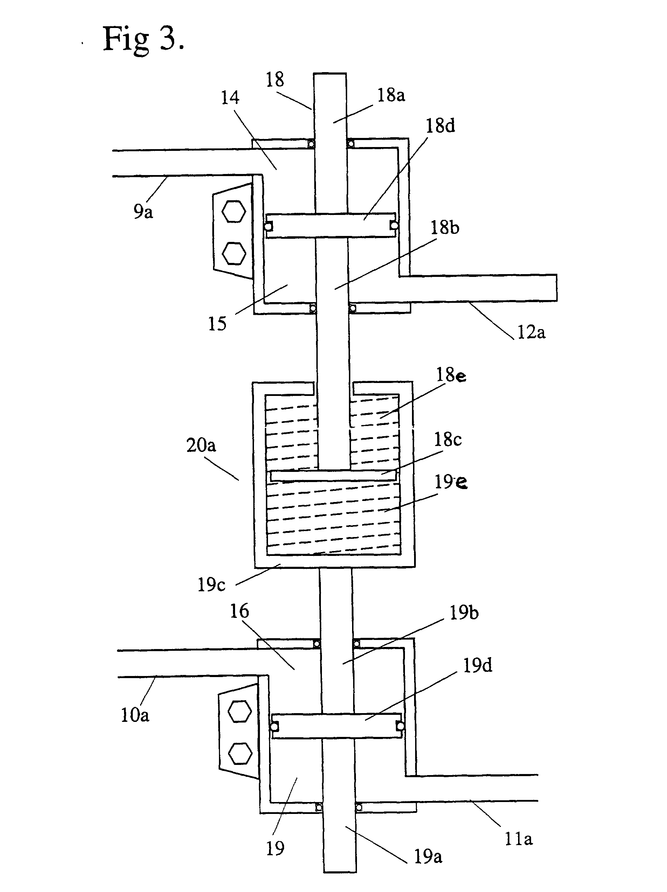

In the Figures 3 to 7 the resilient means are illustrated in different forms, such as rubber or urethane blocks, coil springs, or gas accumulator types. It should be understood that within the scope of this invention that disc springs and other resilient means may equally be used and the spring mechanisms only serve to return the component parts to their correct relative positions.

In this regard the two cylinder portions 13a,13b of the load distribution unit 13 are understood to be mechanically attached to one another so that the relative motions of their piston assemblies 18 and 19 do not cause their housing cylinders to also move. The attachment cleats numbered 21a, 21b therefore illustrate attachment means to the chassis (or any convenient member) of the two cylinder portions 13a, and 13b respectively.

The resilient means 20 is normally either held in compression or tension depending on which fluid conduits are connected to which chambers in relation to which end (or side) of the vehicle is heaviest at any given time and also with regard to the relative sizes of the rams 1, 2, 3, 4 bores and rods which define the relative system pressures. It is therefore necessary to design all components relatively so that the resilient member 20 is given the appropriate spring rate or hardness/durometer rating to compensate for any bias and/or expected weight variations.

It should be noted that as the resilient member 20 is frequently a spring of some nature it can become beneficial to introduce a damping component into the load distribution unit to damp out any unwanted spring resonance within this unit. The damping means may be designed into the load distribution unit as an integral part within the body of the unit. Alternatively the two ends of a damper (such as the telescopic shock absorber numbered 22 in Figure 2) may be attached to the two rod ends (as at 18a and 19a) so that the damper is extended and contracted in direct response to any movement induced by two orthogonal wheel inputs but not by diagonal two wheel inputs such as when articulation is occurring. This further ensures that damping occurs specifically and only when needed and that the frictional resistance is minimised by the damper during axle articulation. This is important so that optimal even ground pressure occurs at the wheels during axle articulation while additional damping occurs when wheels impact parallel obstacles with successive axles.

The damper unit should be regarded as an important optional component as it permits the tuning of specific functions in the suspension system. The damper also can be used to delay the responses and interactions between the front and back axle so that inputs at sensitive frequencies resulting from wheel base length road conditions do not upset vehicles smooth passage. Dampers may also take the form of (optionally variable) restrictors 9b, 9c, 12b, 12c, 11b, 11c, 10b, 10c within the conduits, which permit the individual tuning of the various components. For example, when the restrictor-dampers 9b, 10b, 11b, 12b are introduced, fluid is restricted from communicating with the lower chambers 1b, 2b, 3b, 4b so that the resilient effects of the load distribution unit 13 are maximised. Conversely when the dampers 9c, 10c, 11c, 12c are mainly used this prevents the free communication of fluid from the rams to the load distribution unit and encourages fluid to act upon the lower ram chambers 1b, 2b, 3b, 4b with very different consequences. Adjusting the balance of the restrictions exerted by restrictors 9b, 10b, 11b, 12b with reference to restrictors 9c, 10c, 11c, 12c provides the ability to allow for the appropriate tuning of the total damping forces acting on the vehicle. Such tuning can also be accomplished through the careful selection of conduit sizes to provide the appropriate amount of friction to arrive at similar damping responses.

Figure 3 is another alternative method of construction of the load distribution unit 13. In this embodiment the two cylinder portions 13a, 13b are remotely coupled by the resilient means 20a, which may comprise a cylindrical portion 19c fixed to rod portion 19b in the place of flange 19c in Figure 2. At the end of the cylindrical portion facing the other rod there is a hole which can easily accommodate the opposed rod portion 18b.

The end of the opposite rod portion 18b extends through the hole in cylinder 19c so that a flange 18c provided on the end of the rod portion 18b is located inside the chamber and towards the centre of the cylinder 19c. On either side of the flange 18c there is provided a resilient means such as a coil or disc spring or rubber block numbered 18e, 19e. Alternatively the chambers on either side of the flange or piston 18c may be charged with gas to provide a gas spring to remotely locate the piston 18c within cylinder 19d.

One advantage of the resilient means such as 20a over 20 is that the two resilient members may be individually constructed differently to best suit their required functions as tension or compression members with reference to the other parts of the suspension system.

Resilient member 20a may alternatively be constructed by using a shock absorber (damper unit) provided with one or two concentric coil springs internally or externally of the telescopic component.

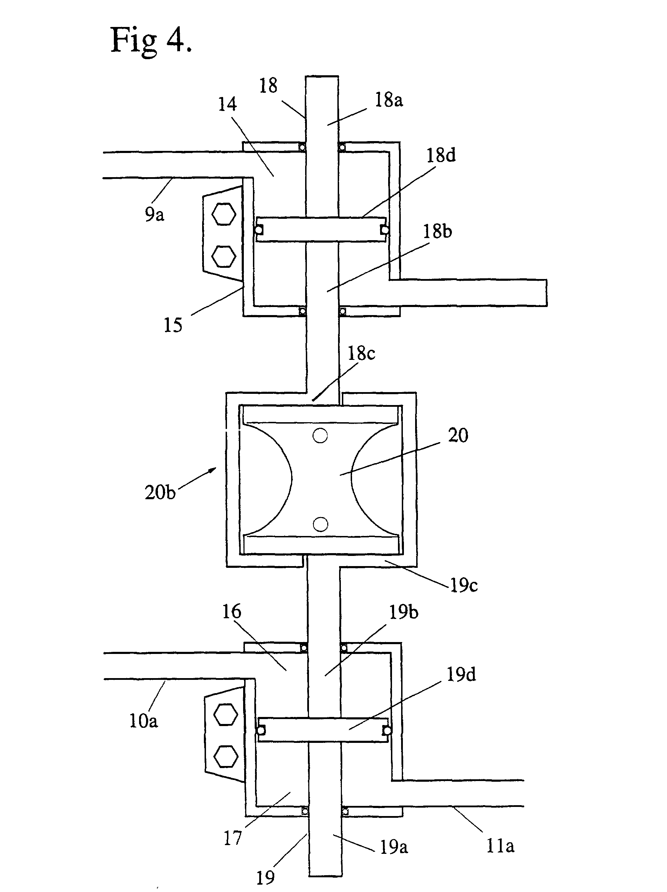

Figure 4 shows another alternative to the central resilient member 20 of Figure 2. This version differs from that shown in Figure 2 in that the resilient member 20 is kept in compression within half cylinders 18c, 19c regardless of whether the two half cylinders 18c and 19c are moving away from one another or towards each other. By keeping the resilient means in compression the mechanical problems of bonding the rubber blocks to the end flanges 18c, and 19c of the embodiment of Figure 2 are obviated.

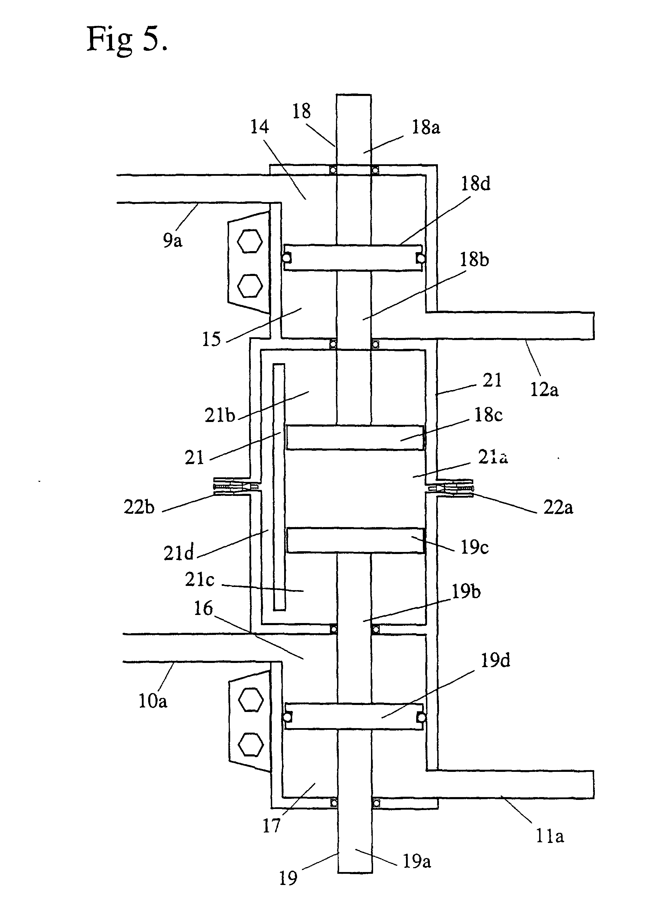

In Figure 5 a gas charged version of the resilient member is illustrated. In essence the two rod ends 18c,19c are constructed as pistons bearing seals within the cylindrical chamber 21 which is an extension of the cylinder portions 13a, 13b. The two pistons subdivide the cylinder 21 into three minor chambers 21 a, 21b, and 21c as shown.

Chambers 21b and 21c, on either side of the central chamber 21 a are interconnected by way of conduit 21c so that these two chambers remain substantially at the same pressure whilst still remaining reciprocal in volume. The purpose of this is to prevent a bias developing which would substantially centre pistons 18c,19c thereby restricting axle articulation with even wheel loading.

Two gas charge valves 22a, 22b are provided so that one valve 22a enables chamber 21a to be charged to an appropriate pressure to resist the pressure differential caused by the front of the vehicles weight exceeding that of the back, and valve 22b enables chambers 21b and 21c to be jointly charged to provide resilience sufficient to maintain vehicle height when the vehicle may weigh more at the rear as during a pitch motion.

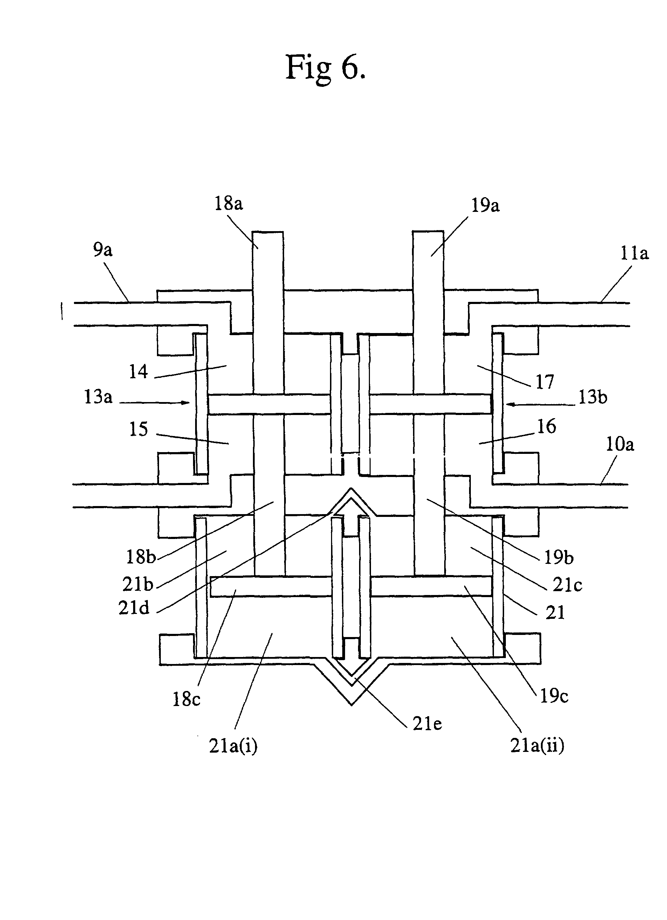

Figure 6 is yet another version of the central resilient means and represents another gas charged form of the resilient means.

In this instance the two cylinder portions 13a and 13b are located parallel so that their ends 18c and 19c do not face each other but face in the same direction. The central cylindrical chamber 21 is divided so that one half is located adjacent one cylinder portion 13a and accommodates piston 18c, and the other half of cylinder 21 located adjacent the other cylinder portion 13b and accommodates piston 19c.

Chambers 21b and 21c are linked by conduit 21d as in Figure 6 so that they maintain a substantially equivalent pressure. As chamber 21a is now divided into two sections 21a(i) and 21a(ii) these are now similarly linked by way of conduit 21e.

In function the version shown in Figure 6 is the same as that shown in Figure 5 but the advantage of the version in Figure 6 is that the overall length of the load distribution unit 13 is reduced which facilitates packaging.

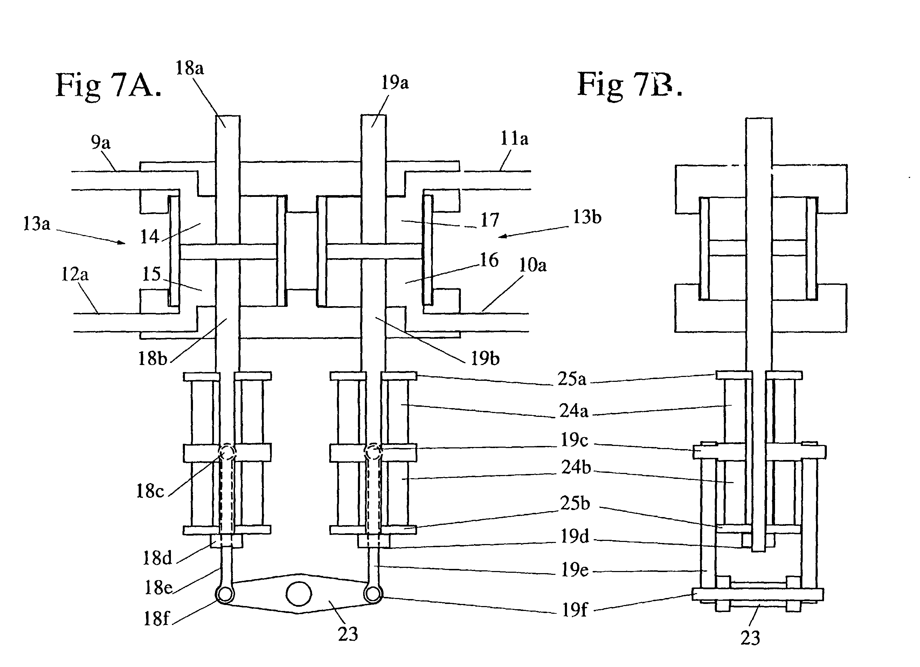

Figures 7a and 7b shows another version of the load distribution unit in which the two cylinder portions 13a and 13b are located in parallel. In this version however, the resilient gas spring chambers are replaced with rubber blocks or coil springs in the following way;

Figure 7a represents a similar elevation view equivalent to that shown in Figure 6. Figure 7b is another elevation diagram drawn at right angles to the first and is included for clarity.

Inner piston rod portions 18b, 19b are elongated to extend to points 18d, 19d. At some point along the length of the extended rod portions there are points 18c, 19c which are equivalent in function to the parts numbered 18c and 19c in the other figures. In these Figures, 18c and 19c may typically comprise a disc mounted and slidably located on the rods 18b and 19b. Protruding from each of these two discs on opposite sides there are two spigots or small rods which carry four arms 18e , 19e. These in turn are similarly flexibly joined at points 18f, 19f to a common rocker arm 23 which is pivotally mounted to the same member as that which locates the rest of the body of the load distribution unit 13. Disc and spigot units 18c and 19c are therefore mechanically and reciprocally mounted with respect to each other so that if one moves 'up' the other moves 'down'.

Resilient members 24a and 24b are functionally similar to the resilient means 18d 19d in Fig 3 or the gas springs 21 a (i) and (ii) and 21b and c, in Figure 6, for example. In the example shown in Fig 7 the resilient means 24a and b may be rubber or urethane blocks concentrically located around rods 18b and 19b and held between end stops marked 25a and 25b which are prevented from moving apart on the rods by any convenient means as shown.

If therefore, the vehicle wheels impact a speed hump with one axle, rod portions 18a and 19a will both be caused to be thrust downwards (with reference to the drawing) which would cause both sets of rubber blocks 24a to become compressed between discs 25a and 18c, 19c while the other rubber blocks 24b are permitted to extend. The impact of the two front wheels would therefore be borne to a degree by the blocks 24a and a similar impact on the two rear wheels simultaneous would cause the compression of the rubber blocks 24b to bear some of the impact.

If however the impact is solely on diagonally opposite wheels as during axle articulation the four rubber blocks would remain substantially undistorted while one piston rod may be extending one way the other is contracting in the opposite direction. In this way load distribution is optimally maintained during diagonal wheel movements while two orthogonal wheel inputs are partially resolved by the resilient means 24, and while roll forces on the other two orthogonally disposed wheels are resisted hydraulically.

Referring again to Figure 1, at some point along the length of each conduit there may be optionally located a fixed or adjustable valve to vary the degree of resistance to the flow of fluid through the conduits. These valves are marked 9b, 10b, 11b, 12b and are normally located between the smaller cylinder chambers and the branch lines 9a, 10a, 11a, 12a, which in turn may have further restrictors 9c, 10c, 11c, 12c located along their lengths. Normally in operation these valves permit a large volume of fluid to flow at low speed (as during axle articulation), while the valves restrict the flow of smaller volumes of fluid at higher speeds which are typical of wheels impacting bumps at speed and which tend to upset the smooth running of the vehicle.

Additionally, it is found that for packaging reasons it is sometimes preferable to have as few accumulators in the wheel arch areas as possible and accordingly only one accumulator per hydraulic circuit is indicated although maximum comfort may be obtained by the inclusion of a second small accumulator located near the lower chambers 1b, 2b, 3b, 4b. Moreover with reference to the type of layout shown in Figures 1 to 7 (which permit additional pitch resilience as a direct result of the design of the resilient means within the load equalisation units 13) it has been found that only a small gas volume is normally required in the accumulator associated with the lower chambers of the hydraulic cylinders.

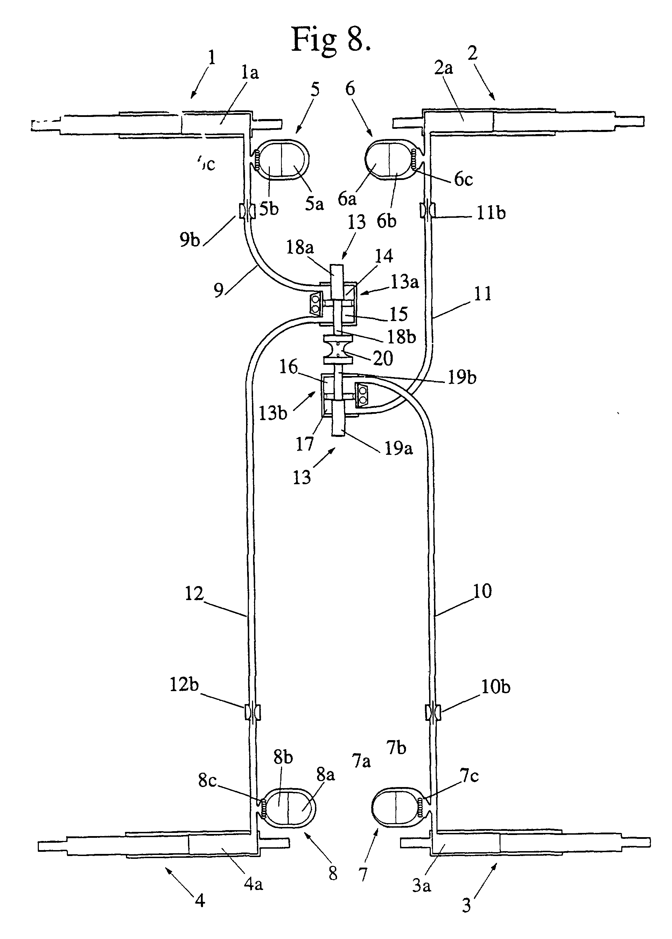

Figure 8 of the drawings depicts a suspension system (not in accordance with the present invention) applied to a vehicle, wherein the hydraulic rams 1, 2, 3 and 4 are single acting rams in contrast to the double acting rams as described with reference to Figure 1. As a result of the rams being only single acting, each of the conduits 9, 10, 11 and 12 only connect the respective upper chambers 1a, 3a, 2a and 4a of the rams with chambers 14, 16, 15 and 17 respectively of the load distribution unit 13. Thus, the portions of the conduits which communicated with the lower chambers 3b, 1b, 4b and 2b of the hydraulic rams can be eliminated.

Flow restrictors 9b, 10b, 11b and 12b positioned in the remaining portions of the conduits 9, 10, 11 and 12 may be desirable to allow further tuning of the suspension characteristics. Variable flow restrictors can be fitted to a 'semi-active' evolution of the system.

Figure 8 also illustrates further modifications to the load distribution unit 13 which may optionally be included in the version shown in Figure 1. In Figure 8 the outer rod portions 18a and 19a are now of differing diameters to the inner rod portions 18b and 19b. This may be necessary to create differential areas from one side of the piston to the other in order to compensate for differential system pressures from front to rear due for example to uneven vehicle weight distribution. The outer rod portions could be larger or smaller in diameter compared to the inner rod portions depending on the direction of the bias, which in turn is dictated by the connection sequence of the conduits to the load distribution unit.

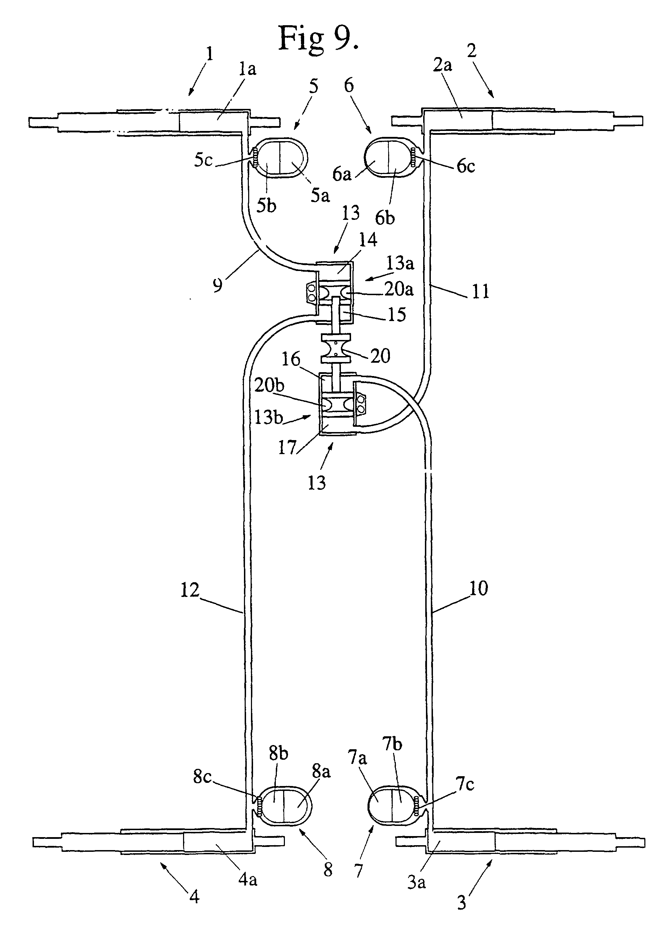

Figure 9 shows the same circuit arrangement as depicted in Figure 8 but with the modifications being restricted to the load distribution unit 13. Whereas in Figure 8, outer rod portions 18a and 19a were of differing diameters to inner rod portions 18b and 19b, by the same reasoning the outer rod portions 18a and 19a could be omitted completely if desired. Depending on the weight distribution of a vehicle it may be necessary to change the sequence in which the conduits are connected to the load distribution unit as mentioned above.

In addition, the load distribution unit 13 as shown in Figures 1 and 2 has been modified in Figure 9 by replacing the pistons 18 and 19 in Figure 2 with a piston constructed in essentially the same way as resilient member 20 as seen in Figure 2. Equivalents of the disk sections 18c and 19c sandwiching the resilient member 20 in Figure 2 are constructed to function as pistons which reciprocate in the chambers 13a and 13b in the same basic manner as the single pistons as shown in Figures 1 and 2. However the use of this construction of the pistons, having the intermediate resilient section, results in some limited resilient movement between the two sections of the piston when one of the wheels is subjected to a sudden shock loading, in the same manner as the load distribution unit 20 does as previously described with reference to Figures 1 and 2. Movement during roll would also be induced resulting in a reduction in roll stiffness with the configuration shown in Figures 8 and 9.

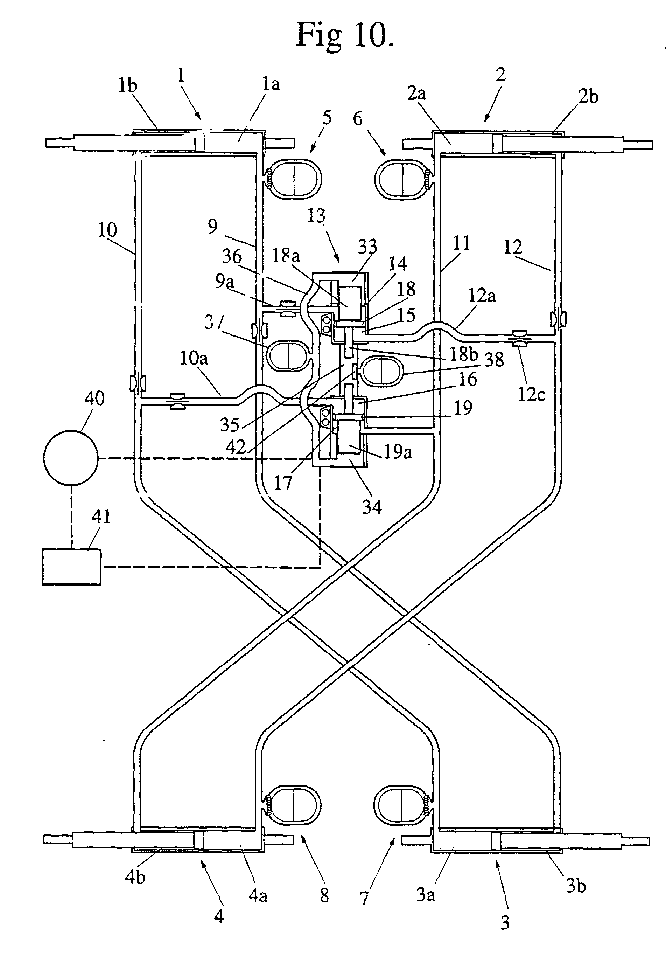

Figure 10 shows a further preferred alternative form of the load distribution unit 13. In addition to chambers 14, 15, 16, 17 provided in the aforementioned forms of the distribution unit 13, the two piston assemblies 18, 19 are separated by a centre chamber 35 containing a compressible gas or a fluid. An accumulator 38 communicates with the centre cylinder 35 and movement of the piston assemblies 18, 19 towards each other will be resisted by the gas or fluid contained within the centre chamber 35. The outer rod portions 18a, 19a are larger in diameter than the inner rod portions 18b, 19b and respectively accommodated within outer chambers 33, 34. These outer chambers are connected by a conduit 36, with a further accumulator 37 being provided on this conduit 36. Fluid is contained within the outer chambers 33, 34 and connecting conduit 36, and movement of the piston assemblies 18, 19 away from each other is resisted by the fluid contained therein.

This load distribution unit 13 has the ability to control pitch and accommodate large variations in vehicle load. For example, if a significant load is added to the rear of the vehicle, the piston assemblies 18, 19 of the load distribution unit 13 will be urged further apart due to the increased pressure and fluid volume in the inner chambers 15, 16 thereof. To compensate for the increased load from the inner chambers 15, 16, additional fluid may be introduced into outer chambers 33, 34 by a pump 40 or other means to increase the pressure acting on the ends of the outer rod portions 18a, 19a thereby allowing the pistons 18, 19 to return to their correct operating positions despite the increased load in the vehicle. Conversely, when the piston assemblies move too close together, it may be necessary to release fluid from the outer chambers 33, 34 to a tank 41 to compensate for removing load from the vehicle or for a load added to the front of the vehicle. Fluid may also be pumped or drained from the centre chamber 35 to control the position of the piston assemblies 18, 19. Returning the pistons 18,19 to their correct operating position allows greater clearance for movement of the piston assemblies to thereby prevent any restriction of the movement of the pistons 18,19 within their respective cylinder portions. Therefore, for a set pressure in the centre chamber 35 (ideally achieved through the use of a pressure regulator valve) the load distribution unit 13 may be controlled to compensate for changes in the load in the vehicle.

To control the necessary flow of fluid to and from the alternative load distribution unit 13, a load distribution unit position sensor (preferably a Hall Effect sensor) is required to enable the position of each piston 18, 19 to be ascertained. In order to achieve the correct positioning of said pistons, an electronic control unit averages the load distribution unit piston position sensor signals to attain the desired initial spacing between the pistons 18, 19 by supplying or releasing fluid from the outer chambers 33, 34.

Further details of this load distribution unit is disclosed in the Applicant's international application No. PCT/AU94/00646.

As noted above, the suspension system according to the present invention tends to reduce pitch motions of a vehicle when going over speed humps or other obstacles. It is however preferable to maintain the height of the rear of the vehicle up until immediately before the rear wheels impact the speed hump and to retract the rear rams as the rear wheels travel over the hump. This helps to further reduce the pitch motion of the vehicle as it travels over humps or other obstacles.

To this end, a fast acting valve 42, such as a solenoid valve, is provided at the mouth of one or both the accumulators 37, 38 of the Ir ad distribution unit 13. This valve 42 can for example be provided at the mouth of the accumulator 38 of the centre chamber 35 as shown in Figure 10. As gas or fluid enters the accumulator 38 when the front wheels hit a hump and fluid is expelled from the top chambers 1a, 2a of the front rams 1, 2 to the load distribution unit 13, the solenoid valve 42 can temporarily close off the accumulator 38 to therefore store the pressurised gas or fluid. An electronic control unit can determine when the rear wheels impact the hump and this has the effect of retracting the rear rams 3, 4 as the rear wheels travel over the hump so that the pitch motion of the vehicle is further reduces the input to the rear axle.

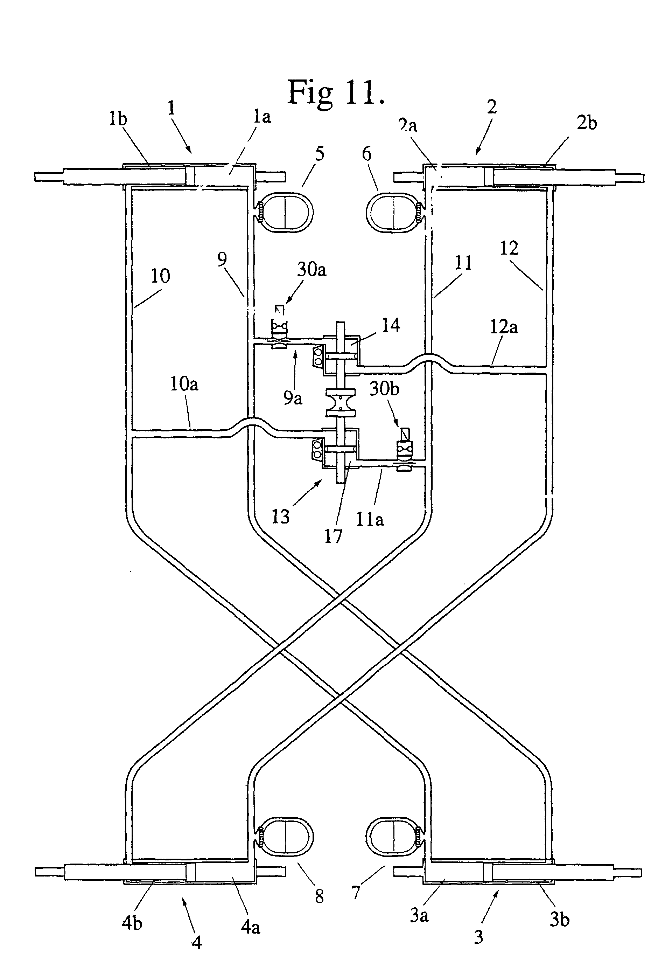

Figure 11 shows the suspension system of Figure 1 which has been modified to incorporate a "load distribution lockout" arrangement.

The Applicant's suspension system has the advantage in allowing large degrees of axle "articulation" without significantly affecting the normal reaction force at each vehicle wheel to the ground thereby maintaining a similar amount of traction over extremely rough ground as over flat ground. The term "articulation" refers to the movement of diagonally disposed wheels in a common direction. Furthermore, these systems oppose and thereby limit the body roll motions created when the vehicle is cornering without the need for roll stabiliser bars.

It has been found that in vehicles fitted with the above noted suspension system, during extreme situations, for example, when there is a combination of very fast cornering and hard braking or fast acceleration, this can result in the lightly loaded wheel of the vehicle lifting completely off the ground. While this does not necessarily effect the overall stability of the vehicle, the lifting of one of the vehicle wheels can be disconcerting.

The load distribution lockout arrangement includes at least one "lock-out" valve 30a, 30b provided on at least one of the branch conduits 9a, 10a, 11a, 12a. In the arrangement shown in Figure 11, valves 30a, 30b are respectively provided in branch conduits 9a and 11a communicating with the outer chambers 14, 17 of the load distribution unit 13.

When the valves 30a, 30b are actuated to block the flow of fluid through the branch conduits, this acts to disable the suspension system so that articulation in the suspension system is restricted or prevented. This stops or minimises the lifting of the wheel under the above noted extreme driving conditions. These conditions can be sensed via a sensor means mounted on the vehicle, the sensor means for actuating the valves 30a, 30b.

The sensor means may include an acceleration sensor. Alternatively or in addition, the sensor means may include a vehicle speed sensor. The sensor means may provide a signal to the control means when both lateral and longitudinal accelerations of the vehicle in excess of programmable preset levels are detected simultaneously, the control means thereby actuating the locking means. The control means may only actuate the locking means when the signal from the vehicle speed sensor indicates the speed to be above a preset level. This prevents actuation of the locking means when the vehicle is traversing rough terrain.

It should be noted that the sensor means may comprise many different types of sensors as long as the control means is able to determine from the available inputs the appropriate reactions to the lateral and longitudinal accelerations acting on the vehicle. For example, the sensor means may alternatively consist of speed, steering angle, throttle position and brake pedal position sensors. By using resilient members 20 in place of pistons in the load distribution unit 13 as shown in figure 9, it is possible to eliminate the need for accumulators 5, 6, 7, 8 in the suspension system. This will generally be the case for any of the embodiments of the suspension system according to the present invention.

The load distribution unit according to the present invention provides the suspension system with additional resilience in the pitch direction of the vehicle while not increasing compliance of the vehicle in the roll direction. This has the advantage in that the front wheels are practically "de-coupled" from the back wheels when the front wheels impact a speed hump or other obstacles so that the back wheels are not significantly influenced by the movement of the front wheels in this situation. This results in less harsh pitch motions of the vehicle and softer ride.

## Claims

1. A suspension system for a vehicle having a load support vehicle body, and at least one pair of front ground engaging wheels and at least one pair of rear ground engaging wheels connected to the vehicle body to support same and each wheel being displaceable relative to the vehicle body in a generally vertical direction, the suspension system comprising:
a double acting ram (1, 2, 3, 4) interconnected between each wheel and the vehicle body, each ram including first and second fluid filled chambers (1a, 1b, 2a, 2b, 3a, 3b, 4a, 4b) varying in volume in response to relative vertical movement between the respective wheel and the vehicle body, each front wheel ram being connected to the diagonally opposite rear wheel ram by a respective pair of fluid communicating conduits (9, 10, 11, 12) a first one of said pair of conduits connecting the first chamber of the front wheel ram to the second chamber of the rear wheel ram and the second one of said pair of conduits connecting the second chamber of the front wheel ram to the first chamber of the rear wheel ram, each pair of conduits and the front and rear wheel rams interconnected thereby constituting a respective closed circuit whereby first and second closed circuits are formed;
a pressure distribution means (13) interposed between the first and second closed circuits and adapted to substantially achieve pressure equilibrium between said closed circuits, said pressure distribution means comprising two primary pressure chambers (13a, 13b), each divided into two secondary pressure chambers (14, 15, 16, 17) by force transfer means (18, 19), the two secondary chambers of one said primary chamber being connected to the first chambers of the rams on one side of the vehicle, the two secondary chambers of the other said primary chamber being connected to the first chambers of the rams on the other side of the vehicle, such that roll motions of the vehicle body are resisted across the force transfer means;
the force transfer means of one of said primary pressure chambers being operatively interconnected to the force transfer means of the other said primary pressure chamber by interconnection means to transfer motion therebetween, and **characterised in that** the interconnection means includes resilience to further permit controlled independent motion to vary the relative positions of the force transfer means in said primary pressure chambers, and thereby provide additional resilience in a pitch direction of the vehicle body relative to a roll direction of the vehicle body.

2. A suspension system as claimed in Claim 1, wherein the interconnection means is effected by a resilient member (20).

3. A suspension system as claimed in Claim 1, wherein the interconnection means is effected by a compressible gas means (20a).

4. A suspension system as claimed in Claim 1, wherein each of said force transfer means (18, 19) at adjacent ends extend into a common chamber (35) isolated from the primary pressure chambers, said common chamber being charged with a fluid to apply equal force to each force transfer means.

5. A suspension system as claimed in Claim 4, wherein an accumulator (38) is in operable communication with said common chamber (35) for fluid flow there between.

6. A suspension system as claimed in Claim 5, wherein the operable communication is through a selectively variable flow rate passage.

7. A suspension system as claimed in Claims 4, 5 or 6, wherein each said force transfer means (18d, 19d) extends into a respective third chamber (33, 34) located on the opposite side of the primary pressure chambers to the location of the common chamber, said third chambers being in operable communication for fluid flow there between.

8. A suspension system as claimed in Claim 7, wherein said operable communication includes an accumulator (37) for fluid flow there between.

9. A suspension system as claimed in Claim 8, wherein the operable communication is through a selectively variable flow rate passage.

10. A suspension system as claimed in Claims 7, 8 or 9, wherein means (40, 41) are provided to selectively supply or withdraw fluid from said third chambers (33, 34).

11. A suspension system as claimed in any one of Claims 4 to 10, wherein means are provided to selectively supply or withdraw fluid from said common'chamber.

12. A suspension system as claimed in any one of claims 4 to 11 wherein the fluid is a gas.

13. A suspension system as claimed in any one of the preceding claims wherein, means (30a, 30b) are provided to selectively isolate the pressure distribution means from at least one of said pairs of fluid communicating conduits.

14. A suspension system as claimed in any one of Claims 7 to 13, wherein each of the force transfer means (18, 19) includes a piston (18d, 19d) and piston rod portions (18a, 18b, 19a, 19b) extending from opposing sides thereof, one piston rod portion being accommodated within the third chamber (33, 34), the other piston rod portion being accommodated within the common chamber (35).

15. A suspension system as claimed in Claim 14, wherein the diameter of said one piston road portion is different to the diameter of said other piston rod portion.

16. A suspension system as claimed in Claim 1, wherein said interconnection means between the two force transfer means (18, 19) includes a respective rigid member projecting from each force transfer means into a further chamber (21) and attached to respective control pistons (18d, 19d) therein, said control pistons defining within said further chamber a first control chamber (21a) between said two control pistons and on the opposite side of each control pistons respective second control chambers (21b, 21c), said first and said second control chambers each being charged with a fluid to normally centralise the pistons defining the minor chambers and to permit controlled movement there between to thereby permit independent control of the pitch and roll of the vehicle.

17. A suspension system as claimed in Claim 16, wherein the two control chambers are disposed in a side-by-side relation and said control pistons are each disposed in respective side-by-side chambers.

## Patentansprüche

1. Federung für ein Fahrzeug, das eine Lasttragkarosserie hat sowie wenigstens ein Paar vordere Laufräder und wenigstens ein Paar hintere Laufräder, die mit der Karosserie verbunden sind, um diese zu tragen, wobei jedes Rad relativ zu der Karosserie in insgesamt vertikaler Richtung verlagerbar ist und wobei die Federung umfaßt:
einen doppelwirkenden Zylinder (1, 2, 3, 4), der zwischen jedes Rad und die Karosserie geschaltet ist, wobei jeder Zylinder eine erste und eine zweite mit Fluid gefüllte Kammer (1a, 1b, 2a, 2b, 3a, 3b, 4a, 4b) aufweist, die aufgrund einer relativen Vertikalbewegung zwischen dem betreffenden Rad und der Karosserie im Volumen variieren, wobei jeder Vorderradzylinder mit dem diagonal entgegengesetzten Hinterradzylinder durch ein Paar Fluidleitungen (9, 10, 11, 12) verbunden ist, wobei eine erste Leitung des Leitungspaares die erste Kammer des Vorderradzylinders mit der zweiten Kammer des Hinterradzylinders verbindet, wobei die zweite Leitung des Leitungspaares die zweite Kammer des Vorderradzylinders mit der ersten Kammer des Hinterradzylinders verbindet und wobei jedes Leitungspaar und der Vorder- und der Hinterradzylinder, die durch dasselbe verbunden sind, dadurch einen geschlossenen Kreis bilden, wodurch ein erster und ein zweiter geschlossener Kreis gebildet sind;
eine Druckverteileinrichtung (13), die zwischen dem ersten und dem zweiten geschlossenen Kreis angeordnet und dafür ausgebildet ist, im wesentlichen Druckgleichgewicht zwischen den geschlossenen Kreisen zu erzielen, wobei die Druckverteileinrichtung zwei primäre Druckkammern (13a, 13b) aufweist, die jeweils durch eine Kraftübertragungseinrichtung (18, 19) in zwei sekundäre Druckkammern (14, 15, 16, 17) unterteilt sind, wobei die beiden sekundären Kammern von einer der primären Kammern mit den ersten Kammern der Zylinder auf einer Seite des Fahrzeuges verbunden sind und wobei die beiden sekundären Kammern der anderen primären Kammer mit den ersten Kammern der Zylinder auf der anderen Seite des Fahrzeuges verbunden sind, so daß Rollbewegungen der Karosserie über die Kraftübertragungseinrichtung entgegengewirkt wird;
wobei die Kraftübertragungseinrichtung von einer der primären Druckkammern mit der Kraftübertragungseinrichtung der anderen primären Druckkammer durch eine Verbindungseinrichtung operativ verbunden ist, um zwischen denselben eine Bewegung zu
übertragen, und
**dadurch gekennzeichnet, daß** die Verbindungseinrichtung Elastizität aufweist, um weiter eine gesteuerte unabhängige Bewegung zu gestatten zum Verändern der Relativpositionen der Kraftübertragungseinrichtungen in den primären Druckkammern und um dadurch für eine zusätzliche Elastizität in einer Nickrichtung der Karosserie relativ zu einer Rollrichtung der Karosserie zu sorgen.

2. Federung nach Anspruch 1, wobei die Verbindungseinrichtung als ein elastisches Teil (20) ausgebildet ist.

3. Federung nach Anspruch 1, wobei die Verbindungseinrichtung als eine kompressible Gaseinrichtung (20a) ausgebildet ist.

4. Federung nach Anspruch 1, wobei jede der Kraftübertragungseinrichtungen (18, 19) sich an benachbarten Enden in eine gemeinsame Kammer (35) erstreckt, die von den primären Druckkammern isoliert ist, wobei die gemeinsame Kammer mit einem Fluid versorgt wird, um eine gleiche Kraft auf jede Kraftübertragungseinrichtung auszuüben.

5. Federung nach Anspruch 4, wobei ein Kraftspeicher (38) mit der gemeinsamen Kammer (35) für eine Fluidströmung zwischen denselben in Wirkverbindung ist.

6. Federung nach Anspruch 5, wobei die Wirkverbindung über einen Durchlaß mit wahlweise veränderbarem Durchsatz hergestellt wird.

7. Federung nach Anspruch 4, 5 oder 6, wobei sich jede der Kraftübertragungseinrichtungen (18d, 19d) in eine dritte Kammer (33, 34) erstreckt, die auf der zu dem Ort der gemeinsamen Kammer entgegengesetzten Seite der primären Druckkammern angeordnet ist, wobei die dritten Kammern zur Fluidströmung zwischen denselben in Wirkverbindung sind.

8. Federung nach Anspruch 7, wobei die Wirkverbindung einen Kraftspeicher (37) zur Fluidströmung zwischen denselben beinhaltet.

9. Federung nach Anspruch 8, wobei die Wirkverbindung über einen Durchlaß mit wahlweise variablem Durchsatz hergestellt wird.

10. Federung nach Anspruch 7, 8 oder 9, wobei die Einrichtungen (40, 41) vorgesehen sind, um den dritten Kammern (33, 34) wahlweise Fluid zuzuführen oder aus denselben abzuleiten.

11. Federung nach einem der Ansprüche 4 bis 10, wobei die Einrichtungen vorgesehen sind, um wahlweise Fluid der gemeinsamen Kammer zuzuführen oder aus derselben abzuleiten.

12. Federung nach einem der Ansprüche 4 bis 11, wobei das Fluid ein Gas ist.

13. Federung nach einem der vorhergehenden Ansprüche, wobei Einrichtungen (30a, 30b) vorgesehen sind, um die Druckverteileinrichtung von wenigstens einem der Fluidleitungspaare wahlweise zu isolieren.

14. Federung nach einem der Ansprüche 7 bis 13, wobei jede der Kraftübertragungseinrichtungen (18, 19) einen Kolben (18d, 19d) und Kolbenstangenteile (18a, 18b, 19a, 19b), die sich von entgegengesetzten Seiten desselben aus erstrecken, aufweist, wobei ein Kolbenstangenteil in der dritten Kammer (33, 34) und der andere Kolbenstangenteil in der gemeinsamen Kammer (35) aufgenommen ist.

15. Federung nach Anspruch 14, wobei der Durchmesser des einen Kolbenstangenteils von dem Durchmesser des anderen Kolbenstangenteils verschieden ist.

16. Federung nach Anspruch 1, wobei die Verbindungseinrichtung zwischen den beiden Kraftübertragungseinrichtungen (18, 19) ein starres Teil aufweist, das von jeder Kraftübertragungseinrichtung aus in eine weitere Kammer (21) hinein vorsteht und an zugeordneten Steuerkolben (18d, 19d) darin befestigt ist, wobei die Steuerkolben innerhalb der weiteren Kammer eine erste Steuerkammer (21a) zwischen den beiden Steuerkolben und jeweils eine zweite Steuerkammer (21b, 21c) auf der entgegengesetzten Seite von jedem der Steuerkolben begrenzen, wobei die erste und die zweite Steuerkammer mit einem Fluid versorgt werden, um die Kolben, die die kleinen Kammern begrenzen, normalerweise zu zentrieren und um eine gesteuerte Bewegung zwischen denselben zu gestatten, um dadurch eine unabhängige Steuerung des Nickens und Rollens des Fahrzeuges zu gestatten.

17. Federung nach Anspruch 16, wobei die beiden Steuerkammern nebeneinander angeordnet sind und wobei die Steuerkolben jeweils in zugeordneten nebeneinander angeordneten Kammern angeordnet sind.

## Revendications

1. Système de suspension d'un véhicule ayant une carrosserie soutenant des charges, et au moins une paire de roues avant à embrayage du sol et au moins une paire de roues arrières à embrayage du sol reliées à la carrosserie du véhicule pour le soutenir et avec chaque roue déplaçable par rapport à la carrosserie dans une direction généralement verticale, le système de suspension comprenant :
Un piston à double effet (1, 2, 3, 4) interconnecté entre chaque roue et la carrosserie du véhicule, chaque piston comprenant des chambres première et seconde remplies de fluide (1a, 1b 2a, 2b, 3a, 3b, 4a, 4b) variant en volume en réponse à un mouvement vertical relatif entre la roue respective et la carrosserie du véhicule, chaque piston de roue avant étant relié à la roue arrière opposée en diagonale par une paire de conduits respectifs de communication de fluide (9, 10, 11, 12) Un premier de ladite paire de conduits reliant la première chambre du piston de roue avant à la seconde chambre du piston de roue arrière et la seconde desdites paires de conduits reliant la deuxième chambre de la roue avant à la première chambre du piston de la roue arrière, avec chaque paire de conduits interconnectée aux pistons des roues avant et arrière, constituant un circuit fermé par lequel les circuits fermés premier et second sont créés; un moyen de répartition de pressions (13) interposé entre les premier et second circuits fermés et adapté pour obtenir en gros l'équilibre des pressions entre lesdits circuits fermés, ledit moyen de répartition des pressions comprenant deux chambres primaires de compression (13a, 13b), chacune divisée en deux chambres secondaires de compression (14, 15, 16, 17) par le moyen de transfert de force (18, 19), les deux chambres secondaires d'une des dites chambres primaires étant reliées aux premières chambres des pistons sur un côté du véhicule, les deux chambres secondaires de l'autre dite chambre primaire étant reliées aux premières chambres des pistons sur l'autre côté du véhicule, de manière que les mouvements de roulis de la carrosserie soient opposés dans tout le moyen de transfert de force;
le moyen de transfert de force d'une des dites chambres de compression étant interconnecté en opération au moyen de transfert de force de l'autre dite chambre primaire de compression par des moyen d'interconnexion pour transférer le mouvement entre elles, et **caractérisé en ce que** le moyen d'interconnexion comprend de la résilience pour permettre en plus un mouvement séparé contrôlé afin de varier les positions relatives du moyen de transfert de force dans lesdites chambres primaires de compression et ainsi fournir une résilience supplémentaire dans une direction primitive de la carrosserie du véhicule par rapport au sens du roulis de la carrosserie du véhicule.

2. Un système de suspension tel que revendiqué à la revendication 1, où le moyen d'interconnexion est effectué par un membre résilient (20).

3. Un système de suspension tel que revendiqué à la revendication 1, où le moyen d'interconnexion est effectué par le moyen d'un gaz compressible (20a).

4. Un système de suspension tel que revendiqué à la revendication 1, où chacun desdits moyens de transfert de force (18, 19) aux extrémités voisines s'étend dans une chambre commune (35) isolée des chambres primaires de compression, ladite chambre commune étant remplie d'un fluide pour appliquer une force égale à chaque moyen de transfert de force.

5. Un système de suspension tel que revendiqué à la revendication 4, dans lequel un accumulateur (38) est en communication exploitable avec ladite chambre commune (35) pour l'écoulement du fluide.

6. Un système de suspension tel que revendiqué à la revendication 5, dans lequel la communication exploitable se fait par un passage sélectif au débit variable.

7. Un système de suspension tel que revendiqué aux revendications 4, 5 ou 6, dans lequel chacun desdits moyens de transfert de force (18d, 19d) s'étend dans une troisième chambre respective (33, 34) située du côté opposé des chambres primaires de compression à l'endroit de la chambre commune, lesdites troisièmes chambres étant en communication exploitable pour que le fluide s'écoule entre elles.

8. Un système de suspension tel que revendiqué à la revendication 7, dans lequel ladite communication exploitable inclut un accumulateur (37) pour l'écoulement du fluide.

9. Un système de suspension tel que revendiqué à la revendication 8, dans lequel la communication exploitable se fait par un passage sélectif à débit variable.

10. Un système de suspension tel que revendiqué dans les revendications 7, 8 ou 9, dans lequel des moyens (40, 41) sont fournis pour alimenter sélectivement ou retirer du fluide des dites troisièmes chambres (33, 34).

11. Un système de suspension tel que revendiqué dans les revendications 4 à 10, dans lequel des moyens sont fournis pour alimenter sélectivement ou retirer du fluide de ladite chambre commune.

12. Un système de suspension tel que revendiqué dans les revendications 4 à 11, dans lequel le fluide est un gaz.

13. Un système de suspension tel que revendiqué dans une des revendications précédentes, dans lequel des moyens (30a, 30b) sont fournis pour sélectivement isoler les moyens de répartition de la pression d'au moins une desdites paires de conduits de communication du fluide.

14. Un système de suspension tel que revendiqué dans les revendications 7 à 13, dans lequel chacun des moyens de transfert de force (18, 19) comprend un piston (18d, 19d) et des parties de la tige de piston (18a, 18b, 19a, 19b) qui sortent des côtés opposés, une partie de la tige de piston étant disposée dans la troisième chambre (33, 34), l'autre partie de tige de piston étant disposée dans la chambre commune (35).

15. Un système de suspension tel que revendiqué dans la revendication 14, dans lequel le diamètre de ladite partie de tige de piston est différent du diamètre de l'autre dite partie de tige de piston.

16. Un système de suspension tel que revendiqué dans la revendication 1, dans lequel ledit moyen d'interconnexion entre les deux moyens de transfert de force (18, 19) comprend un membre respectif rigide dépassant de chaque moyen de transfert de force dans une autre chambre (21) et attaché aux pistons respectifs de commande (18d, 19d) qui y sont logés, lesdits pistons de commande définissant dans ladite autre chambre une première chambre de commande (21a) entre les deux dits pistons de commande et du côté opposé de chaque piston de commande suivant les secondes chambres de commande (21b, 21c), lesdites première et seconde chambres de commande étant chacune remplie d'un fluide pour normalement centraliser les pistons définissant les plus petites chambres et pour permettre un mouvement contrôlé entre elles, permettant ainsi une commande indépendante du tangage et du roulis du véhicule.

17. Un système de suspension tel que revendiqué dans la revendication 16, dans lequel les deux chambres de commande sont placées à côté l'une de l'autre et lesdits pistons de commande sont chacun disposé dans les chambres voisines respectives.
